# EUROPEAN PATENT APPLICATION

(11) **EP 4 578 631 A1**
(43) Date of publication of application: **02.07.2025**
(21) Application number: 24000151.1
(22) Date of filing: 23.12.2024
(51) Int. Cl.: B29C 64/118, B29C 64/35, B33Y 30/00, B33Y 40/00

(54) **AUTOMATIC NOZZLE CLEANING SYSTEM FOR A CARTESIAN 3D PRINTER**

(30) Priority: 28.12.2023 PL 44736023
(71) Applicant: Politechnika Slaska, 44-100 Gliwice (PL)
(72) Inventor: Wlazlo, Aleksander, 40-872 Katowice (PL); Machoczek, Tomasz, 44-217 Rybnik (PL); Gasiorek, Damian, 42-674 Zbroslawice (PL)

(57) **Abstract**

The automatic cleaning nozzle system, especially for the 3D printer, which is equipped with cleaning elements, is characterized by the fact that the belt wheel holder **(II-7)** which drives the print head (II-4) is attached to the cleaning system's body consisting of at least two integrated parts: I-2 and I-7, where the part (I-7) is attached to the arm (I-9) with the brush (I-10) which fibers are directed perpendicular to the print surface. The part (I-2) is attached to the drivetrain (I-3) controlled by the control system. The arm (I-9) with the brush (I-10) is embedded in the roller bearing (I-8) and integrated with the servomechanism (I-3a) that controls the arm's (I-9) movement.

## Description

The subject of the invention is an automatic nozzle cleaning system for a cartesian 3D printer using method of molding plasticized thermoplastic.

The patent PL225351B1 is recognized. This technological solution includes a handle equipped with cleaning modules with different cleaning properties, sensitivity, absorbency and abrasive characteristics of surfaces adapted to the printing material used. The solution also includes containers with at least one scraper edge. This patent doesn't solve the problem of using brush fibers for the cleaning nozzle.

The aim of the invention is to resolve the problem of excessive adverse deposition of the printing material adjoined to the side surface of the nozzle and its cleaning regardless of the print layer.

The key feature of this invention is the automatic nozzle cleaning system of a 3D printer, equipped with cleaning elements characterized by the fact that a body of the nozzle cleaning system is attached to the belt wheel holder which houses a motor responsible for moving the print head. The body of the nozzle cleaning system is divided into at least two integrated parts, where some of them are attached to an arm with a brush with fibers directed perpendicularly to the print bed, and the rest of the parts are attached to a drivetrain controlled by a control system, additionally the arm with the brush is embedded in a roller bearing and integrated with a servomechanism that controls its movement.
The arm connected with the brush is equipped with a stub embedded inside a roller bearing. The drivetrain consists of a servomechanism and an arm horn that is embedded on the shaft of the servomechanism.
The automatic cleaning system advantageously features a spacer which co-creates its body.

Benefits of the device that is the subject of the invention consists of a possibility of cleaning a printer's nozzle surface regardless of currently produced print layer. Another benefit is a possibility of moving the arm with the brush by controlling the drivetrain which prevents their collision with the print bed. The nozzle cleaning operation can be fulfilled regardless of the distance between the nozzle and the print bed in the direction of the Z axis.

The invention enables a disposal of the adverse printing material adjoined to the side surface of the nozzle, regardless of the actual print bed position and its distance from the nozzle. When the printer's nozzle is heated to plasticizing temperature of the currently used material then the printing material flows through the nozzle aperture and frequently settles to its side surface. This occurs even when the printer is in idle mode e.g. during the procedure of changing the printing material. During printing the redundant printing material that has not been removed from the nozzle's side surface comes loose and frequently deposits on the manufactured element, thus creating a risk of damaging the element or the 3D printer. This is highly unfavorable because the manufactured part can lack desired features set during the designing stage (that part additionally needs to be subjected to the finishing treatment or it becomes a waste product). In addition the color characteristics for certain print layers can become tainted and can lead to lowering the esthetical values of the manufactured part.

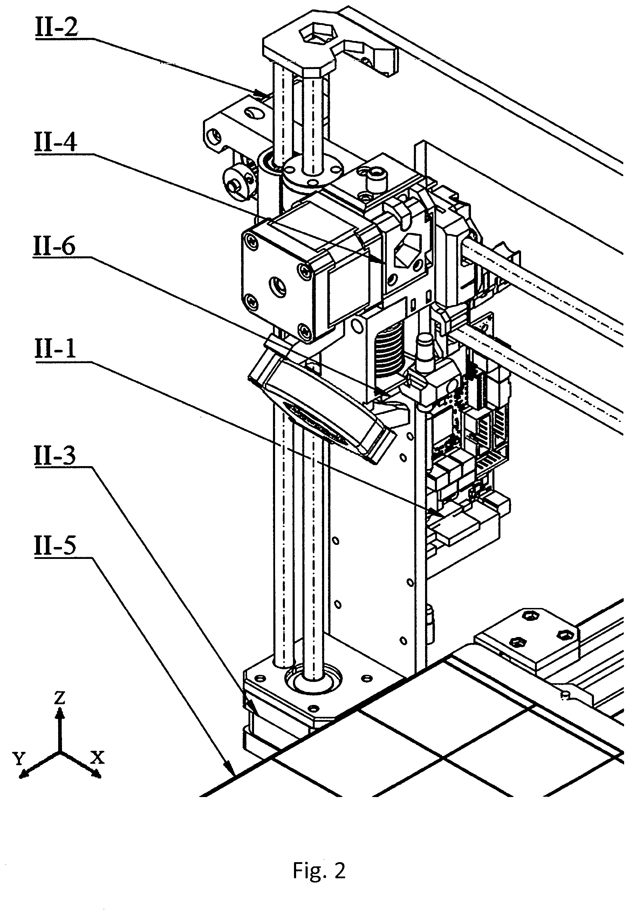

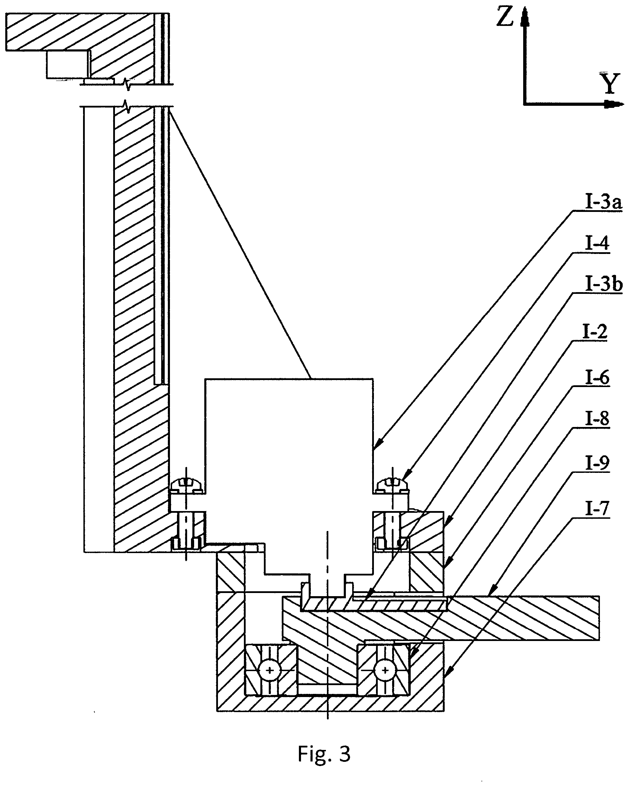

The invention is presented in the example in figures: Fig. 1a (3D printer **II** together with the cleaning system **I** with brush in ready to work position), Fig. 1b (3D printer **II** together with the cleaning system **I** with brush in deactivated position), Fig. 2 (List of the components of a typical 3D printer **II,** by FDM method) and Fig. 3 (cross-sectional view of the drivetrain **I-3** being part of the automatic nozzle cleaning system).

### Invention is shown in an embodiment example.

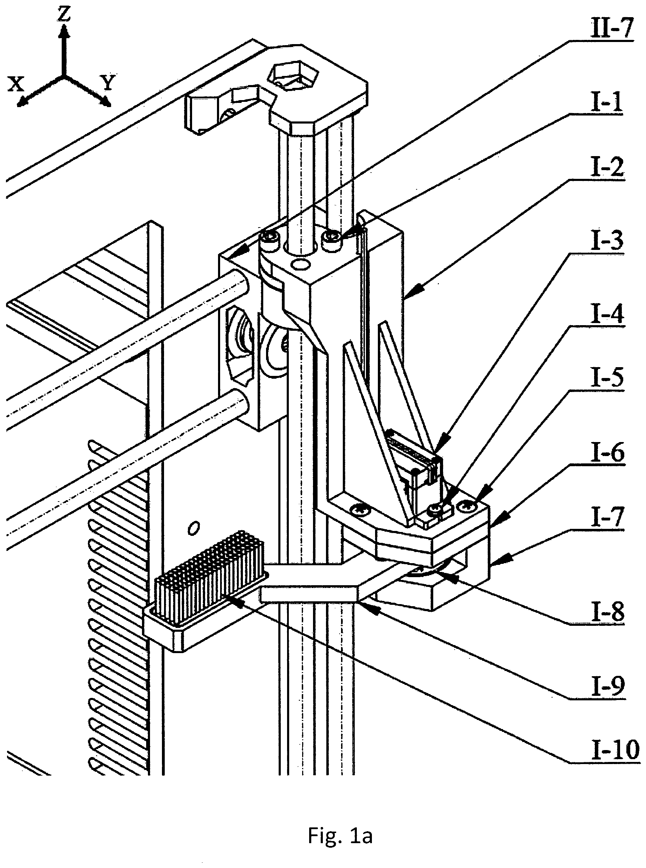

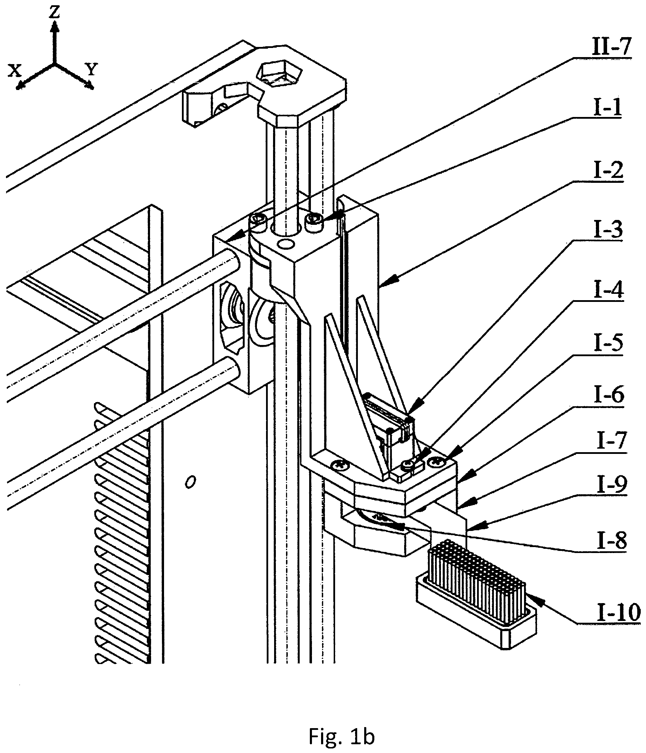

The device that is the subject of the invention shown in Fig. 1a and Fig. 1b is characterized by the fact that the belt wheel holder **II-7** which constitutes the X axis drive, is attached to the body of the cleaning system via a screw connection **I-1**. The body of the cleaning system consists of three parts: **I-2, I-6** and **I-7**. Those parts are integrated with each other via a screw connection **I-5** which enables its assembly and disassembly to for e.g. perform maintenance work. The drivetrain **I-3** is attached to some parts of the cleaning system body **I-2** via a screw connection **I-4.** The drivetrain **I-3** consists of a servomechanism **I-3a** and an arm horn **I3-b**. The shaft of the drivetrain **I-3** is connected with a moving arm **I-9** embedded on one side in a roller bearing **I-8.** The arm horn **I-3b** is mounted on the shaft of the servomechanism **I-3a**. The arm horn **I-3b** is a part of the clutch cooperating with the corresponding socket shape located in the arm **I-9,** connected with the brush **I-10** by corresponding socket shape which is being driven by the drivetrain **I-3**. The drive from the drivetrain **I-3** is shape-shifted to the arm **I-9**. The arm **I-9** contains a stub that is embedded in the roller bearing **I-8** positioned collinearly with the shaft of the drivetrain **I-3** in the Z axis direction. The brush **I-10** is located on the end of the arm **I-9**. The brush **I-10** consists of fibers arranged parallely to the Z axis (perpendicularly to the print bed i.e. in a parallel extrusion direction of the printing material from the nozzle **II-6**). The brush **I-10** containing fibers is connected by an adhesive with the arm **I-9**.

Modus operandi: the typical 3D printer's control system **II-1** is connected with the drivetrain **II-2** which drives the print head **II-4** along the X-axis. The control system **II-1** is also connected with the drivetrain **II-3** which drives the print head **II-4** along the Z-axis. Before the 3D printer starts printing or during the filament change procedure, the control system **II-1** sends information in the form of an electrical signal to the drivetrain **II-3** which causes the print head **II-4** to move along the Z-axis (in a direction perpendicular to the print bed surface **II-5**). Next the control system **II-1** sends an electric signal which is interpreted by the drivetrain **I-3.** The control system in this example is a single-board microcontroller which controls the work of the nozzle cleaning system. This single-board controller is attached to the 3D printer's frame. Next the arm **I-9** rotates above the print bed **II-5**. The printer's control system **II-1** sends the signal to the drive **II-2**, which causes the print head **II-4** to move perpendicular to the brush's **I-10** fibers which causes the redundant printing material to stick to the brush **I-10** fiber's surface. The cleaning procedure consists of the rotation of the moving arm **I-9** with the attached brush **I-10** containing wire fibers. The movement of the arm **I-9** is caused by the rotation of the arm horn **I-3b** which is driven by the servomechanism **I-3a**. Readiness of the cleaning system is achieved when the moving arm **I-9** and brush **I-10** reach the position that allows the printer's nozzle **II-6** to rub against the brush's fibers by moving along the X-axis. The nozzle **II-6** cleaning process is performed by executing series of reciprocating movements by the print head **II-4,** which causes the redundant printing material to stick to the brush **I-10** fiber's surface. The last stage of the nozzle cleaning procedure is the return of the moving arm **I-9** to the beginning position, localized in the direction parallel to the Y-axis (this position ensures lack of collision with any of the printer's components). Attaching the automatic nozzle cleaning system **I** to the belt wheel holder **II-7** allows for the cleaning operation to be performed regardless of the position of the nozzle **II-6** relative to the print bed **II-5.**

## Claims

1. The automatic nozzle cleaning system, especially for the 3D printer, is equipped with cleaning elements, **characterized by the fact** that the belt wheel holder **(II-7)** constituting the drive of the print head (II-4) is attached to the body of the nozzle cleaning system which is divided into at least two parts integrated with one another: I-2 and I-7, where the part (I-7) is attached to the arm (1-9) with the brush (I-10) including fibers directed perpendicularly to the print surface, and the part (I-2) is connected to the drivetrain (I-3) controlled by the control system, where the arm (I-9) with the brush (I-10) is embedded in the roller bearing (I-8) and integrated with a servomechanism (I-3a) which controls its movement.

2. The automatic nozzle cleaning system, **characterized by the fact that,** the arm (1-9) connected with the brush (I-10) is equipped with a stub embedded in the roller bearing (1-8).

3. The automatic nozzle cleaning system, **characterized by the fact that** the drivetrain (I-3) is composed of the servomechanism (I-3a) and the arm horn (I-3b) embedded on the shaft of the servomechanism (I-3a).

4. The automatic nozzle cleaning system, **characterized by the fact that** it contains a spacer (1-6) forming a part of the body.
